# EUROPEAN PATENT APPLICATION

(11) **EP 3 073 351 A1**
(43) Date of publication of application: **28.09.2016**
(21) Application number: 16162712.0
(22) Date of filing: 29.03.2016
(51) Int. Cl.: G06F 1/16, G06F 3/01, G06F 3/0346, G06F 3/0338

(54) **CONTROLLING A WEARABLE DEVICE USING GESTURES**

(30) Priority: 26.03.2015 US 201514669387
(71) Applicant: Lenovo (Singapore) Pte. Ltd., Singapore 556741 (SG)
(72) Inventor: SCHWARZ, David Alexander, Morrisville, NC 27560 (US); QIAN, Ming, Cary, NC 27519 (US); BULA, Geoffrey Simon, Apex, NC 27502 (US); NICHOLSON, John Weldon, Cars, NC 27513 (US)
(74) Representative: Leffers, Thomas

(57) **Abstract**

One embodiment provides a method including: receiving, at a wearable device, non-image data from at least one sensor operatively coupled to the wearable device, wherein the non-image data is based upon a gesture performed by a user; identifying, using a processor, the gesture performed by a user using the non-image data; and performing an action based upon the gesture identified. Other aspects are described and claimed.

## Description

### BACKGROUND

Information handling devices ("devices"), for example cell phones, smart phones, tablet devices, laptop computers, and the like, are increasingly being joined or coupled with wearable devices, such as smart watches, glasses, or head mounted displays, etc. The wearable device allows a user to interface in a limited capacity with the information handling device on a small scale display. The wearable device is often small in size and may allow limited user input. For example, the user may be able to provide input to the wearable device through a touch screen, button(s) located on the wearable device, and/or audio input.

### BRIEF SUMMARY

In summary, one aspect provides a method, comprising: receiving, at a wearable device, non-image data from at least one sensor operatively coupled to the wearable device, wherein the non-image data is based upon a gesture performed by a user; identifying, using a processor, the gesture performed by a user using the non-image data; and performing an action based upon the gesture identified.

Another aspect provides a wearable device, comprising: a wearable housing; a display screen; at least one sensor; a processor operatively coupled to the display screen and the at least one sensor and housed by the wearable housing; and a memory that stores instructions executable by the processor to: receive non-image data from the at least one sensor, wherein the non-image data is based upon a gesture performed by a user; identify the gesture performed by a user using the non-image data; and perform an action based upon the gesture identified.

A further aspect provides a product, comprising: a storage device that stores code executable by a processor, the code comprising: code that receives, at a wearable device, non-image data from at least one sensor operatively coupled to the wearable device, wherein the non-image data is based upon a gesture performed by a user; code that identifies the gesture performed by a user using the non-image data; and code that performs an action based upon the gesture identified.

The foregoing is a summary and thus may contain simplifications, generalizations, and omissions of detail; consequently, those skilled in the art will appreciate that the summary is illustrative only and is not intended to be in any way limiting.

For a better understanding of the embodiments, together with other and further features and advantages thereof, reference is made to the following description, taken in conjunction with the accompanying drawings. The scope of the invention will be pointed out in the appended claims.

### BRIEF DESCRIPTION OF THE SEVERAL VIEWS OF THE DRAWINGS

FIG. 1 illustrates an example of information handling device circuitry.
FIG. 2 illustrates another example of information handling device circuitry.
FIG. 3 illustrates an example method of gesture control of a wearable device.
FIG. 4 illustrates an example of a strap for a wearable device.

### DETAILED DESCRIPTION

It will be readily understood that the components of the embodiments, as generally described and illustrated in the figures herein, may be arranged and designed in a wide variety of different configurations in addition to the described example embodiments. Thus, the following more detailed description of the example embodiments, as represented in the figures, is not intended to limit the scope of the embodiments, as claimed, but is merely representative of example embodiments.

Reference throughout this specification to "one embodiment" or "an embodiment" (or the like) means that a particular feature, structure, or characteristic described in connection with the embodiment is included in at least one embodiment. Thus, the appearance of the phrases "in one embodiment" or "in an embodiment" or the like in various places throughout this specification are not necessarily all referring to the same embodiment.

Furthermore, the described features, structures, or characteristics may be combined in any suitable manner in one or more embodiments. In the following description, numerous specific details are provided to give a thorough understanding of embodiments. One skilled in the relevant art will recognize, however, that the various embodiments can be practiced without one or more of the specific details, or with other methods, components, materials, et cetera. In other instances, well known structures, materials, or operations are not shown or described in detail to avoid obfuscation.

Generally, wearable devices may be coupled or connected to a larger information handling device (e.g., cellular phone, smart phone, tablet, laptop computer, personal computer, etc.). The wearable device may then offer some standalone applications, but may generally be used to interface with the larger information handling device. The wearable device is often essentially a pass through device used to interface with a larger information handling device. One reason for the reduced functionality of the wearable device is due to the small nature of a wearable device (e.g., smart watch, armband, heads up display, etc.), which limits user input options. These limited user input options reduce the ability of a user to provide enough inputs to allow more functionality within the wearable device.

Generally, the main user input option for a wearable device is input using an audio input device (e.g., a microphone). Some wearable devices may additionally include a button(s) located on the device or a touch screen that may allow limited user interaction with the device. However, these conventional user input features offer very limited interfacing capabilities with the wearable device.

Some remote control devices, e.g., a band, use gestures by a user to control another device, e.g., a gaming device. However, current wearable remote control type devices that detect gestures, for example, through electromyography (EMG), lack the functional benefit of a smart-watch. Instead, these remote control type wearable devices are just pass through controllers for interacting with separate devices. One reason for this is that the detection of EMG data is difficult. Therefore, the devices that leverage EMG data are designed to be worn in a location with larger muscles, for example, the upper forearm or upper arm rather than on the wrist, i.e., the location a smart-watch is worn. This upper arm location results in a device that transmits data suitable for controlling another device but not much else. Using this arm band technology to control a wearable device such as a smart-watch would therefore require that the user wear two devices, which may be cumbersome for a user and cause an already burdened interface to become even more complex.

These and other conventional approaches to providing user input to a wearable device regularly result in frustration for a user because the wearable device restricts a user to a small number of user inputs. Additionally, the applications and features included in the wearable device have to be created in such a manner as to respond to only the limited input options, which results in wearable devices with a reduced functionality compared to a larger information handling device. As such, a technical problem is found in that current wearable devices fail to take advantage of gestures performed by a user which could be used to control or interface with the wearable device.

Accordingly, an embodiment employs EMG and pressure sensors built directly into the strap(s) of a smart-watch. For example, two electrodes and a reference would comprise a single EMG sensor, which may be pre-amplified in the strap itself (e.g., to limit cable artifacts) or on the phone or other operatively connected device (e.g., to reduce strap cost), or even sampled directly on the sensor (e.g., minimum of 1kHz, 16 bit sampling required for EMG per Nyquist's theorem). A force sensitive resistor may be built behind sensor pads that are capable of capturing changes in wrist geometry with different contractions, irrespective of EMG signals. Since inertial motion units (IMU) come in most electronic devices as a default, this technology would leverage the rich data stream of the IMU with the biometric sensors, such as wrist rotations.

In an embodiment, these three sensor streams may be processed through different feature extraction algorithms, for example root mean square (RMS), maximum voluntary contraction ratios, or fast Fourier transform (FFT) for EMG, basic thresholding for pressure, and dynamic time warping with the IMU. Sensor fusion may be done in two levels.

In feature-level fusion, features may be used as a single data steam to train a predictor, such as using an unscented Kalman filter. In decision-level fusion, features may train individual gesture classifiers, such as a support vector machine, that can fused into a single super hypothesis of a set of trained gestures, based on some training weights (e.g., decision tree) that are updated (e.g., continuously updated).

An embodiment provides a method of receiving data from at least one sensor operatively coupled to the wearable device. For example, the sensor may include a sensor that detects electromyography data, pressure data, and/or inertial data. This data may indicate to an embodiment that the user is making a gesture which can be attributed to a gesture to control or interface with the wearable device. Upon receiving this data, an embodiment may identify the gesture performed by the user. One embodiment may use a feature extraction technique to identify the gesture.

For example, using data from each sensor, an embodiment may be able to identify at least a portion of the gesture performed. After identifying the portions of the gesture, an embodiment may aggregate the data and then identify which gesture is made up of the portions of the gesture that were identified. An embodiment may use a decision-level fusion technique to identify the gesture. In such an embodiment, the data from each sensor may be combined together and then used to identify the gesture. After identifying the gesture, an embodiment may perform an action which may be associated with the identified gesture.

The illustrated example embodiments will be best understood by reference to the figures. The following description is intended only by way of example, and simply illustrates certain example embodiments.

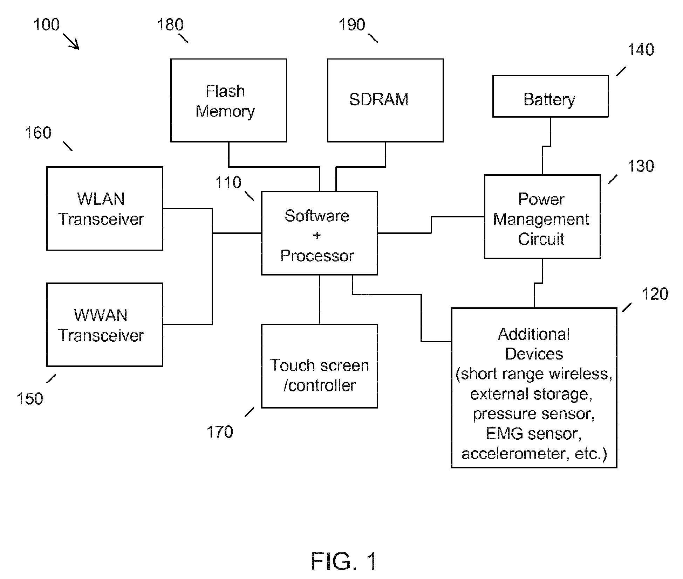

While various other circuits, circuitry or components may be utilized in information handling devices, with regard to smart phone and/or tablet circuitry 100, an example illustrated in FIG. 1 includes a system on a chip design found for example in tablet or other mobile computing platforms. Software and processor(s) are combined in a single chip 110. Processors comprise internal arithmetic units, registers, cache memory, busses, I/O ports, etc., as is well known in the art. Internal busses and the like depend on different vendors, but essentially all the peripheral devices (120) may attach to a single chip 110. The circuitry 100 combines the processor, memory control, and I/O controller hub all into a single chip 110. Also, systems 100 of this type do not typically use SATA or PCI or LPC. Common interfaces, for example, include SDIO and I2C.

There are power management chip(s) 130, e.g., a battery management unit, BMU, which manage power as supplied, for example, via a rechargeable battery 140, which may be recharged by a connection to a power source (not shown). In at least one design, a single chip, such as 110, is used to supply BIOS like functionality and DRAM memory.

System 100 typically includes one or more of a WWAN transceiver 150 and a WLAN transceiver 160 for connecting to various networks, such as telecommunications networks and wireless Internet devices, e.g., access points. Additionally, devices 120 are commonly included, e.g., pressure sensors, electromyography (EMG) sensors, accelerometers, gyroscopes, stretch sensors, tension sensors, and/or IMUs for providing additional input data, as further described herein. System 100 often includes a touch screen 170 for data input and display/rendering. System 100 also typically includes various memory devices, for example flash memory 180 and SDRAM 190.

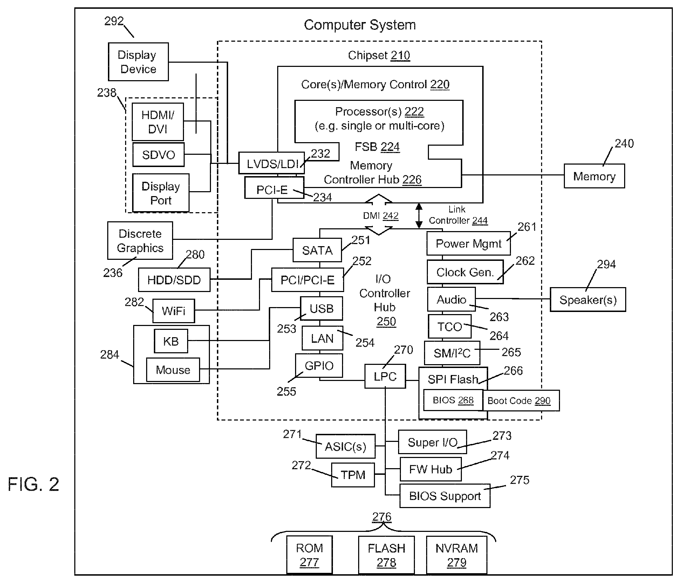

FIG. 2 depicts a block diagram of another example of information handling device circuits, circuitry or components. The example depicted in FIG. 2 may correspond to computing systems such as the THINKPAD series of personal computers sold by Lenovo (US) Inc. of Morrisville, NC, or other devices. As is apparent from the description herein, embodiments may include other features or only some of the features of the example illustrated in FIG. 2.

The example of FIG. 2 includes a so-called chipset 210 (a group of integrated circuits, or chips, that work together, chipsets) with an architecture that may vary depending on manufacturer (for example, INTEL, AMD, ARM, etc.). INTEL is a registered trademark of Intel Corporation in the United States and other countries. AMD is a registered trademark of Advanced Micro Devices, Inc. in the United States and other countries. ARM is an unregistered trademark of ARM Holdings plc in the United States and other countries. The architecture of the chipset 210 includes a core and memory control group 220 and an I/O controller hub 250 that exchanges information (for example, data, signals, commands, etc.) via a direct management interface (DMI) 242 or a link controller 244. In FIG. 2, the DMI 242 is a chip-to-chip interface (sometimes referred to as being a link between a "northbridge" and a "southbridge"). The core and memory control group 220 include one or more processors 222 (for example, single or multi-core) and a memory controller hub 226 that exchange information via a front side bus (FSB) 224; noting that components of the group 220 may be integrated in a chip that supplants the conventional "northbridge" style architecture. One or more processors 222 comprise internal arithmetic units, registers, cache memory, busses, I/O ports, etc., as is well known in the art.

In FIG. 2, the memory controller hub 226 interfaces with memory 240 (for example, to provide support for a type of RAM that may be referred to as "system memory" or "memory"). The memory controller hub 226 further includes a low voltage differential signaling (LVDS) interface 232 for a display device 292 (for example, a CRT, a flat panel, touch screen, etc.). A block 238 includes some technologies that may be supported via the LVDS interface 232 (for example, serial digital video, HDMI/DVI, display port). The memory controller hub 226 also includes a PCI-express interface (PCI-E) 234 that may support discrete graphics 236.

In FIG. 2, the I/O hub controller 250 includes a SATA interface 251 (for example, for HDDs, SDDs, etc., 280), a PCI-E interface 252 (for example, for wireless connections 282), a USB interface 253 (for example, for devices 284 such as a digitizer, keyboard, mice, cameras, phones, microphones, storage, other connected devices, etc.), a network interface 254 (for example, LAN), a GPIO interface 255, a LPC interface 270 (for ASICs 271, a TPM 272, a super I/O 273, a firmware hub 274, BIOS support 275 as well as various types of memory 276 such as ROM 277, Flash 278, and NVRAM 279), a power management interface 261, a clock generator interface 262, an audio interface 263 (for example, for speakers 294), a TCO interface 264, a system management bus interface 265, and SPI Flash 266, which can include BIOS 268 and boot code 290. The I/O hub controller 250 may include gigabit Ethernet support.

The system, upon power on, may be configured to execute boot code 290 for the BIOS 268, as stored within the SPI Flash 266, and thereafter processes data under the control of one or more operating systems and application software (for example, stored in system memory 240). An operating system may be stored in any of a variety of locations and accessed, for example, according to instructions of the BIOS 268. As described herein, a device may include fewer or more features than shown in the system of FIG. 2.

Information handling device circuitry, as for example outlined in FIG. 1, may be used in devices such as smart-watches, heads up displays, arm bands, and other devices which a user may wear. Additionally, wearable devices may be connected or coupled to devices such as tablets, smart phones, personal computer devices generally, and/or electronic devices having circuitry as outlined in FIG. 1 or FIG. 2, allowing a user to interact with such devices through the wearable device. For example, the circuitry outlined in FIG. 1 may be implemented in a tablet or smart phone embodiment, whereas the circuitry outlined in FIG. 2 may be implemented in a personal computer embodiment.

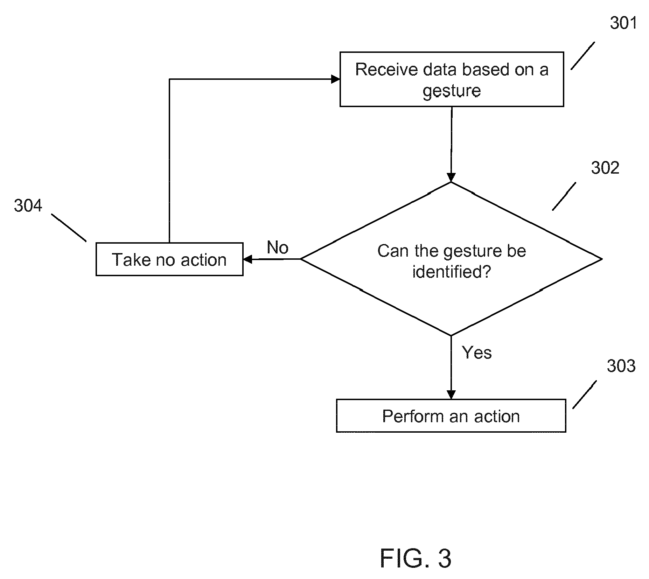

Referring now to FIG. 3, at 301, an embodiment may receive, at a wearable device such as a smart-watch, non-image data at various sensors as a result of a gesture performed by a user. The sensor or sensors may include a sensor that detects electromyography (EMG), pressure, tension, stretch, movement (e.g., rotation, acceleration, inertia, etc.) and the like.

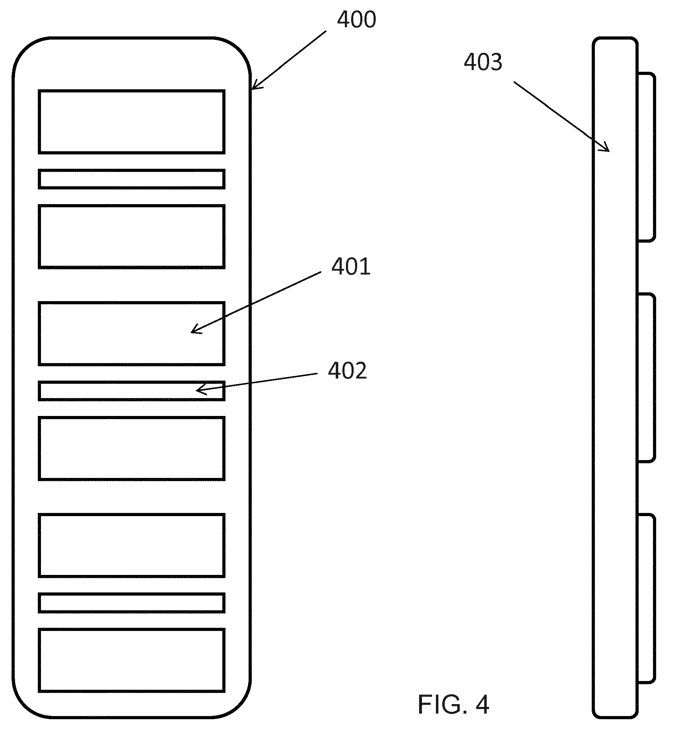

For example, referring to FIG. 4, the sensor may be located on or within the armband and/or strap 400 of a wearable device. An EMG sensor may be located on the armband touching the user in order to sense EMG data that results from a user contracting a muscle or groups of muscles. The EMG sensor may comprise a reference 402 and two electrodes 401 in order to detect muscle movements and resultant electrical pulses. A stretch, pressure, or tension sensor 403 may be located within the armband in order to detect movement of the user when the user is performing a gesture. For example, a stretch sensor may determine the amount and location of stretch with respect to the armband. As another example, a pressure sensor may determine if one part of the armband is receiving more pressure than another part.

The sensors may be integral to the wearable device itself. For example, the wearable device may comprise IMUs (e.g., accelerometers, gyroscopes, etc.) to identify a movement of the device that is the result of user movement. In one embodiment, some sensors may be located in the armband, for example, EMG and pressure sensors, and some sensors may be located on or within the wearable device proper, for example, accelerometers and gyroscopes disposed within the body of a smart-watch.

The sensor(s) may then send data relating to the gesture to a processing unit which may be included within the wearable device. This data may include electromyography data, pressure data, inertial data, tension data, stretch data, and/or other data detected and/or received by the sensor(s). For example, if a user performs a swipe gesture, EMG sensors may detect data indicating that all the fingers have been extended, inertial sensors may detect data indicating that the hand has rotated and moved in a particular way, and pressure or stretch sensors may detect data indicating that the hand has moved from the left to right.

The data received by the wearable device may be a derivative of the data that was received by the sensor(s). For example, a pressure sensor may detect a particular pressure or force (e.g., pounds per square inch, Newton, etc.) but may send data to the wearable device processing unit that indicates the pressure is over a particular threshold rather than the actual number. The sensor may detect whether the data received has reached or exceeded a particular threshold.

An embodiment may include a default threshold to account for inadvertent gestures (e.g., the user moving their arm without intended to control the wearable device, the movement being too small, etc.). If the data does not exceed a threshold, the data may not be sent to the wearable device for further processing (e.g., gesture identification). For example, sensed data may be considered noise by the sensor. Alternatively, the data may be sent to the wearable device for use in identifying the gesture, and the wearable device may then determine whether the data exceeds the threshold or whether the data constitutes noise.

Referring back to FIG. 3, an embodiment may attempt to identify, using the data received, the gesture performed by the user at 302. In one embodiment this identification may comprise associating the data with a gesture. For example, an embodiment may be trained to a particular user and may associate particular data readings with a particular action of that user.

In attempting to identify a gesture, an embodiment may process the data through an extraction algorithm, for example, root mean square (RMS), maximum voluntary contraction ratios, fast Fourier transform (FFT), basic thresholding, dynamic time warping, and the like. The extraction algorithm may be chosen based upon the data received. For example, EMG data may be processed through an FFT algorithm but not a dynamic time warping algorithm.

One embodiment may use a feature based method to identify the gesture. For example, an embodiment may collect the data from the one or more sensors and use each of these data streams to extract at least one feature of the gesture. For example, one data stream may be from one or more EMG sensors. The EMG sensors may indicate a particular frequency power from one of the sensors and a different frequency power from another sensor. An embodiment may then look at the power and specific frequencies from the sensors and look for a pattern indicative of a particular motion, for example using common spatial features. An embodiment may additionally get data streams from other sensors, for example, pressure sensors, stretch sensors, tension sensors, and the like, and use each of these data streams to identify a gesture feature.

In one embodiment the data may be collected and used to extract a gesture space to create and/or find a particular decision tree. The decision tree may be included in a decision forest comprising multiple decision trees. The collected data may then be sent to a particular model, which may choose a decision tree from the decision forest and guide the decision tree based upon the weight or confidence of the data stream of the prediction model. For example, if the gesture performed by the user results in strong pressure data, the decision tree that may be used may include gestures that have strong pressure data. In one embodiment, the data streams may be aggregated, for example, using a super-classification method where each gesture is classified independently first and then aggregated into a single model. In one embodiment, this single model may be a single nonlinear model, for example, an unscented Kalman filter, hidden Markov model, Bayesian model, and the like.

In an embodiment a decision level method of gesture identification may be used. For example, an embodiment may collect the data streams from all the sensors (e.g., EMG, pressure, tension, stretch, etc.) and combine all the streams. The combined streams may then be sent to a prediction model that identifies a decision tree corresponding to features of the data streams. In such a method, the predictor model may find the gesture space based upon the data rather than extracting the gesture space. In such a decision level method of gesture identification, the data streams may be classified against known gestures using discrete classifiers, for example, using support vector machines. For example, based upon the gesture data, an embodiment may first determine whether the gesture was a static gesture (e.g., a thumbs up gesture, finger point, etc.) or a dynamic gesture (e.g., hand swipe, scroll down, etc.). Upon making this determination, the predictor model may move to the next node of the decision tree which may include a new classification level, for example, contraction of muscles vs. extension of muscles. After moving through the nodes of the decision tree using these classifiers the model will identify the gesture that was performed by the user. Other methods of gesture identification are possible and contemplated.

If the gesture cannot be identified, an embodiment may take no action at 304 and may wait for additional or new data at 301. If, however, the gesture can be identified, an embodiment may perform an action based upon that gesture. In one embodiment a particular gesture may be associated with a particular action. For example, a thumbs-up gesture may be associated with a confirmation action. The gestures may be preprogrammed into the wearable device or, additionally or alternatively, may be programmed by the user. In one embodiment, the user may be able to override preprogrammed gestures and the actions taken based upon a particular gesture.

In one embodiment, performing an action may comprise controlling an alternate device using the gesture identified. For example, a wearable device may determine that a user has performed a swipe gesture. However, the wearable device may not have an application that requires a swipe gesture. The wearable device may be connected to a second device which does have an application requiring a swipe gesture. The wearable device may send a signal to the second device to cause the swipe gesture to perform an action on the second device. Alternatively or additionally, the wearable device may act as a pass through device and may send the data received from the sensors to the second device without processing the data at the wearable device.

The various embodiments described herein thus represent a technical improvement to providing user input to a wearable device. Using the techniques described herein, a user can perform a gesture to provide input to a wearable device. This helps reduce the frustration of a user in that the user can accomplish more with just the wearable device. Additionally, the techniques described herein help increase the functionality of the wearable device, which may allow the wearable device to be a standalone device rather than being coupled or connected to a larger information handling device.

As will be appreciated by one skilled in the art, various aspects may be embodied as a system, method or device program product. Accordingly, aspects may take the form of an entirely hardware embodiment or an embodiment including software that may all generally be referred to herein as a "circuit," "module" or "system." Furthermore, aspects may take the form of a device program product embodied in one or more device readable medium(s) having device readable program code embodied therewith.

It should be noted that the various functions described herein may be implemented using instructions stored on a device readable storage medium such as a non-signal storage device that are executed by a processor. A storage device may be, for example, an electronic, magnetic, optical, electromagnetic, infrared, or semiconductor system, apparatus, or device, or any suitable combination of the foregoing. More specific examples of a storage medium would include the following: a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a storage device is not a signal and "non-transitory" includes all media except signal media.

Program code embodied on a storage medium may be transmitted using any appropriate medium, including but not limited to wireless, wireline, optical fiber cable, RF, et cetera, or any suitable combination of the foregoing.

Program code for carrying out operations may be written in any combination of one or more programming languages. The program code may execute entirely on a single device, partly on a single device, as a stand-alone software package, partly on single device and partly on another device, or entirely on the other device. In some cases, the devices may be connected through any type of connection or network, including a local area network (LAN) or a wide area network (WAN), or the connection may be made through other devices (for example, through the Internet using an Internet Service Provider), through wireless connections, e.g., near-field communication, or through a hard wire connection, such as over a USB connection.

Example embodiments are described herein with reference to the figures, which illustrate example methods, devices and program products according to various example embodiments. It will be understood that the actions and functionality may be implemented at least in part by program instructions. These program instructions may be provided to a processor of a device, a special purpose information handling device, or other programmable data processing device to produce a machine, such that the instructions, which execute via a processor of the device implement the functions/acts specified.

It is worth noting that while specific blocks are used in the figures, and a particular ordering of blocks has been illustrated, these are non-limiting examples. In certain contexts, two or more blocks may be combined, a block may be split into two or more blocks, or certain blocks may be re-ordered or re-organized as appropriate, as the explicit illustrated examples are used only for descriptive purposes and are not to be construed as limiting.

As used herein, the singular "a" and "an" may be construed as including the plural "one or more" unless clearly indicated otherwise.

This disclosure has been presented for purposes of illustration and description but is not intended to be exhaustive or limiting. Many modifications and variations will be apparent to those of ordinary skill in the art. The example embodiments were chosen and described in order to explain principles and practical application, and to enable others of ordinary skill in the art to understand the disclosure for various embodiments with various modifications as are suited to the particular use contemplated.

Thus, although illustrative example embodiments have been described herein with reference to the accompanying figures, it is to be understood that this description is not limiting and that various other changes and modifications may be affected therein by one skilled in the art without departing from the scope or spirit of the disclosure.

## Claims

1. A method, comprising:
receiving, at a wearable device, non-image data from at least one sensor operatively coupled to the wearable device, wherein the non-image data is based upon a gesture performed by a user;
identifying, using a processor, the gesture performed by a user using the non-image data; and
performing an action based upon the gesture identified.

2. The method of claim 1, wherein the non-image data comprises at least one of: electromyography data, pressure data, and inertial data.

3. The method of claim 1, wherein the identifying comprises associating the non-image data with a gesture.

4. The method of claim 1, wherein the non-image data comprises an electromyography data stream, a pressure sensor data stream, and an inertial data stream, and wherein the identifying comprises using each of the data streams to extract at least one feature of the gesture.

5. The method of claim 4, further comprising aggregating the data streams into a single nonlinear model.

6. The method of claim 5, wherein the aggregating comprises using an unscented Kalman filter.

7. The method of claim 1, wherein the non-image data comprises an electromyography data stream, a pressure sensor data stream, and an inertial data stream and wherein the identifying comprises combining the data streams.

8. The method of claim 7, wherein the identifying comprises classifying the combined data streams using at least one support vector machine.

9. The method of claim 1, wherein the performing an action comprises controlling an alternate device using the gesture identified.

10. The method of claim 1, further comprising associating the gesture with an action.

11. A wearable device, comprising:
a wearable housing;
a display screen;
at least one sensor;
a processor operatively coupled to the display screen and the at least one sensor and housed by the wearable housing; and
a memory that stores instructions executable by the processor to:
receive non-image data from the at least one sensor, wherein the non-image data is based upon a gesture performed by a user;
identify the gesture performed by a user using the non-image data; and
perform an action based upon the gesture identified.

12. The wearable device of claim 11, wherein the non-image data comprises at least one of: electromyography data, pressure data, and inertial data.

13. The wearable device of claim 11, wherein to identify comprises associating the non-image data with a gesture.

14. The wearable device of claim 11, wherein the non-image data comprises an electromyography data stream, a pressure sensor data stream, and an inertial data stream, and wherein to identify comprises using each of the data streams to extract at least one feature of the gesture.

15. The wearable device of claim 14, wherein the instructions are further executable by the processor to aggregate the data streams into a single nonlinear model.

16. The wearable device of claim 15, wherein to aggregate comprises using an unscented Kalman filter.

17. The wearable device of claim 11, wherein the non-image data comprises an electromyography data stream, a pressure sensor data stream, and an inertial data stream and wherein to identify comprises combining the data streams.

18. The wearable device of claim 17, wherein to identify comprises classifying the combined data streams using at least one support vector machine.

19. The wearable device of claim 11, wherein to perform an action comprises controlling an alternate device using the gesture identified.

20. A product, comprising:
a storage device that stores code executable by a processor, the code comprising:
code that receives, at a wearable device, non-image data from at least one sensor operatively coupled to the wearable device, wherein the non-image data is based upon a gesture performed by a user;
code that identifies the gesture performed by a user using the non-image data; and
code that performs an action based upon the gesture identified.
